# EUROPEAN PATENT APPLICATION

(11) **EP 4 346 051 A1**
(43) Date of publication of application: **03.04.2024**
(21) Application number: 23386012.1
(22) Date of filing: 09.02.2023
(51) Int. Cl.: H02J 3/38

(54) **SMART ELECTRONIC DC TO AC POWER CONVERTER WITH MULTIPLE ENERGY SOURCES**

(30) Priority: 13.07.2022 GR 20220100557
(71) Applicant: TECHNICAL UNIVERSITY OF CRETE, 73100 Chania, Crete (GR); Koutroulis, Eftychios, Kounoupidiana, 73100 Chania Crete (GR); KANELLOS, Fotios, Kounoupidiana, 73100 Chania, Crete (GR)
(72) Inventor: Koutroulis, Eftychios, 73100 Chania (GR); Kanellos, Fotios, 73100 Chania (GR)
(74) Representative: Panagiotidou, Effimia

(57) **Abstract**

Smart electronic direct current to alternating current (DC/AC) converter (1) whose power electronic circuit (7) is of transformerless Multi-Port Converter topology and interconnects an electric vehicle (3), a supercapacitor array (4), a battery array (5), a photovoltaic array (6), a local AC electrical load (8) and the electric grid (2) without using a separate power circuit for each of its DC power sources. It includes a control unit (18) that controls the power electronic circuit (7) in real time, calculating the optimal operating times of the connected energy storage units (3) and (5) and maximizing the power produced by the photovoltaic array (6). It also includes a communication subsystem (20) with a local computer (15) for parameterization and monitoring of its operation. The smart power electronic converter (1) of the present invention provides support of the voltage and frequency of the electrical network (2), ensures uninterrupted operation of the local AC load (8) during disturbances of the electrical network (2) and converts the local energy system (8) to a flexible producer-consumer of electricity.

## Description

The invention refers to a direct current to alternating current (DC/AC) power electronic converter with multiple DC energy sources and an AC output, whose power electronic circuit is of transformerless multiple-port converter topology (Multi-Port Converter, MPC) interconnecting a hybrid energy storage system, a photovoltaic (PV) array, an AC local electrical load and the electric grid.

The present invention concerns an electronic device with the following functional characteristics:
1. it has the ability to optimally charge-discharge the interconnected energy storage devices according to their loading, the cost of the electricity of the power grid, the power output of the PV array and the local energy consumption.
2. it has the ability to predict the energy consumption of the local AC electrical load.
3. its operation allows the support of the frequency, the regulation of the reactive power and the support of the voltage of the electrical network it is connected to.
4. it provides the capability of uninterrupted operation of the system it interconnects (e.g. household electrical system) during large temporary voltage dips or extended interruptions of the connection to the electrical network.
5. it provides the capability of improving the quality of the power supplied to the local electrical system where it is integrated, by providing a voltage of better quality than that of the power grid in terms of harmonic distortion and more stable amplitude and frequency.

DC/AC power electronic converters (inverters) are required to interface Renewable Energy Sources (RES) and energy storage systems with the electric grid. At the research and industrial level, power electronic converters have been developed for PV systems with the ability to support the local distribution network voltage and frequency, which remains limited due to the absence of energy storage. The effectiveness of voltage regulation in distribution systems to which high-power RES systems are connected has been investigated through the interconnection of separate energy storage systems. The energy storage system can be based either on batteries that have the advantage of high energy density, or supercapacitors that have the advantage of higher power density, or hybrid devices that combine the advantages of these two types of energy storage. Until now, the integration of hybrid energy storage in PV systems has been performed by combining separate individual direct current to direct current (DC/DC) power electronic converters for each energy storage unit, resulting in increased complexity and cost. The multiple-input power converters of MPC topology offer a solution, but their application has been limited to energy storage integration devices in PV systems using only batteries and not hybrid storage systems. The currently available on the market hybrid PV inverters have only batteries as an energy storage unit and do not offer grid support functions. Also, inverters with the ability to connect only batteries and without the ability to connect supercapacitors and PV arrays and grid-support capability are currently available on the market.

The survey of commercially available power electronic converters and related scientific literature highlights the need to develop the smart power electronic converter (1) of the present invention, which compared to the DC/AC power converters developed at the research and industrial level has the following combined advantages: (a) interconnects a PV array, hybrid energy storage system, local electrical load and the electrical network to provide integrated services to them and (b) has integrated energy management subsystems, communication with the required entities of the electric power system (e.g. load aggregators and electricity provider) and forecasting algorithms for the served local AC load and the integrated PV power generation.

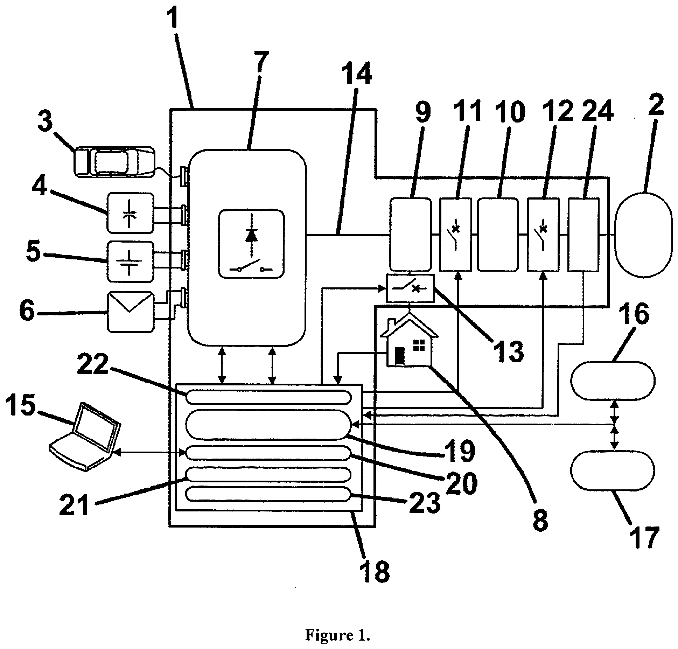

The internal arrangement of the smart power electronic converter (1) of the present invention and its interconnection with the electrical network (2) is shown in Figure 1. It contains four DC inputs for connecting an electric vehicle battery (3), a supercapacitor array (4), a battery array (5) and a PV array (6). One input (4) is reserved for the connection of supercapacitors as they are characterized by high power density (1-100 kW/kg), low thermal losses and long life that make them suitable for providing auxiliary services to electrical networks, such as support of the frequency and voltage (during normal disturbances and major disturbances) and short-period power supply to the local residential electric system (8). The four DC inputs (3), (4), (5) and (6) of the smart power electronic converter of the present invention are connected to the unique power electronic circuit (7) based on MPC transformerless topology, which does not use a separate power circuit in each of its DC power sources, in order to minimize the manufacturing cost and size and maximize the efficiency of the smart power electronic converter (1) of the present invention.

The power electronic circuit (7) of the smart power electronic converter (1) of the present invention is connected to the electrical network (2) and the AC electrical load of the local electrical installation (8) through the electrical filters (9) and (10) of Figure 1, respectively. It uses three automatic switches (11), (12) and (13) whose operating states (open/closed) determine if the local AC load (8) is electrified from the electrical network (2) or the smart electronic converter (1). The AC output (14) of the power electronic circuit (7) of the smart power electronic converter (1) of the present invention can be either single-phase or three-phase.

The smart power electronic converter (1) of the present invention has a communication subsystem (20) with a local computer (15) for its parameterization by the user and supervision of its operation. It also allows the user to select the desired function without requiring modification of the hardware. Moreover, it has the ability to send signals and receive command-signals from the local network operator and/or the electric load aggregator (ELA) (16). In order to optimally charge the battery of the electric vehicle, it has the ability to communicate with the provider of electric mobility services (PEMS), the electric mobility transactions provider (EMTP) and the electricity provider (17).

The smart power electronic converter (1) of the present invention has an automatic operation mode selection according to the connected storage units. For example, it has recognition of the connection of an electric vehicle and the ability to calculate the optimal charging and discharging times of its battery while simultaneously providing auxiliary services to the electric grid.

The control unit (18) of the power electronic circuit (7) of the smart power electronic converter (1) of the present invention controls the DC inputs (3), (4), (5) and (6) of the converter in a unified manner in real time and calculates the optimal operating times of the interconnected residential AC load (8) and charging and discharging of the connected energy storage units (3) and (5), taking into account the values of the following parameters:
- Parameter 1: the forecast of the electricity price (variable pricing),
- Parameter 2: the forecast of the load of the electrical power system (EPS) (2) to which the smart power converter of the present invention is connected to,
- Parameter 3: the forecast of the energy production of the PV array,
- Parameter 4: the forecast of the energy consumption of the host (local) electrical consumer (8),
- Parameter 5: the preferences of the user of the electric vehicle (charging duration, level of the stored energy during disconnection, permitted upper and lower limits of the stored energy and the exchanged power, provision of vehicle-to-grid and vehicle-to-home services),
- Parameter 6: the upper and lower limits of the stored energy and exchanged power of the battery bank (the energy of the supercapacitors is used only for the primary frequency control).

The values of parameters 1 and 2 are obtained from the electrical network/system operator through a communication subsystem capable of sending signals and receiving command-signals (19). The values of parameters 3 and 4 are calculated by the optimization subsystem (21) of the smart power electronic converter of the present invention. The values of parameters 5 and 6 are entered by the user through the communication subsystem (20) with a local computer (15).

The optimization subsystem (21) of the smart power electronic converter of the present invention calculates the minimum operating cost of the local system, satisfying all technical and operational constraints (e.g. maximum-minimum stored energy and power exchanged with the electric grid, etc.) and ensuring at the same time the maximization of the lifetime of the batteries (of the electric vehicle and the separate battery bank). As a result, the optimal charge-discharge trajectories of the electric vehicle battery, the battery bank and the power consumption of the flexible residential AC loads are obtained. Optimal operation scheduling is repeated at regular intervals to limit prediction errors and disturbances as much as possible using updated data from the DC inputs (3), (4), (5) and (6) and the communication subsystems (19) and (20). The use of conventional batteries gives the smart power electronic converter (1) of the present invention the additional capability of the optimal management of the energy it exchanges with the electrical network (2) depending on the load of the electrical network or the electricity price (e.g. variable or bi-zonal tariff). The electric vehicle connection (3) ensures the same characteristics as the previous case with the additional limitations resulting from the preferences of the electric vehicle user. The PV array connection (6) combined with the hybrid energy storage system consisting of units (3), (4) and (5), converts the local system (3), (4), (5), (6), (8) to a flexible producer-consumer of electricity.

The real-time control subsystem of the smart power converter (22) implements the optimal charge-discharge trajectories of the electric vehicle battery (3) and the separate battery bank (5) as obtained by the optimization subsystem (21) by appropriately controlling the power electronic circuit (7) of the smart power electronic converter (1). The current state of charge of the storage units is estimated using measurements and after being compared to its optimal value then the power electronic circuit (7) imposes the necessary output power of the energy storage units to converge to the optimal trajectories.

The power produced by the PV array (6) is maximized by controlling the power electronic circuit (7) of the smart power electronic converter (1) of the present invention by the Maximum Power Point Tracking (MPPT) unit (23) of the control unit (18) of the smart power inverter (1) so that the power produced by the PV array is continuously maximized, even in partially shading conditions that are often met in buildings.

The smart power electronic converter of the present invention (1) has an electronic measuring device (24) of the instantaneous voltage and instantaneous current at the point of connection to the electrical network (2) on the basis of which the active and reactive power are calculated by the optimization subsystem (22) of the control unit (18). Through the application of voltage-frequency droop control by the optimization subsystem (22) of the control unit (18), the voltage and frequency of the electrical network is supported. The energy of the supercapacitors is used for primary frequency support while the energy of the battery pack and the battery of the electric vehicle are used for secondary frequency support. The supercapacitors are fully charged during periods of normal frequency values and inject the necessary amount of energy for primary regulation during periods of under-frequency. In periods of over-frequency the frequency is supported by the battery array and the electric vehicle. The measurements of the electronic device (24) are also used by the control unit (18) to detect large voltage drops (transient or not). In the case of transient under-voltage phenomena, the capability of uninterrupted operation is activated where the inverter provides the maximum possible reactive power to the electric grid and disconnects from it only when the voltage dip violates the limits imposed by the grid operator. In non-transient phenomena (e.g. detection of a power outage from the electrical network) the switch (11) of Figure 1 is commanded to open and the control unit (18) of the smart power electronic converter controls its operation so that it supplies the residential AC load with constant voltage and frequency.

The smart power electronic converter of the present invention was analyzed theoretically and its operation was confirmed through laboratory experiments. It has been shown that the smart power electronic converter (1) can interconnect a hybrid energy storage system consisting of modules (3), (4) and (5), a PV array (6), a local electrical AC load (8) and the electric grid (2), turning the local electrical system (3), (4), (5), (6), (8) into a flexible producer-consumer of electricity and providing voltage and frequency support services to the electric grid (2).

## Claims

1. Direct current to alternating current (DC/AC) power electronic converter (1) with four direct current (DC) power sources (3), (4), (5), (6) and one alternating current (AC) output (14), **characterized in that** its electronic circuit (7) is of transformerless Multi-Port Converter (MPC) topology without a separate power converter circuit in each of its DC power sources and interconnects an electric vehicle battery bank (3), a supercapacitor array (4), a battery array (5), a photovoltaic (PV) array (6), a local AC electrical load (8) and the electric grid (2).

2. The power electronic converter (1) according to Claim 1, **characterized by** the implementation of the control of the power electronic circuit (7) for the energy management of the interconnected energy sources using:
(a) a control unit (18) of the power circuit which uniformly controls the DC voltage inputs (3), (4), (5) and (6) in real time and calculates the optimal operation times of the interconnected household load (8) and charging and discharging of the connected energy storage units (3) and (5), through the control of the power electronic circuit (7) of the smart power electronic converter (1),
(b) an optimization subsystem (21) that calculates the minimum operating cost of the local electrical load (8) and the battery arrays (3) and (5) satisfying all technical and operational constraints and at the same time ensuring the maximization of the lifetime of battery packs (3) and (5),
(c) a real-time control subsystem (22) of the smart power converter (1) that implements the optimal charge-discharge trajectories of the electric vehicle battery bank (3) and the battery pack (5) as derived from the optimization subsystem, through control of the power electronic circuit (7) of the smart power electronic converter (1),
(d) a Maximum Power Point Tracking (MPPT) unit (23) which controls the power electronic circuit (7) of the smart power electronic converter (1) in a way that the power produced by the PV array DC input source (6) to be constantly maximized, even in partial shading conditions,
(e) a communication subsystem (20) and a local computer (15) for user parameterization and monitoring of the operation of the smart power electronic converter (1).

3. The power electronic converter (1) according to Claims 1 and 2, **characterized in that** it has the ability to communicate with the local network operator and/or the electric load aggregator (ELA) (16), as well as the provider of electric mobility services (PEMS), the electric mobility transactions provider (EMTP) and the electric energy provider (17), through a communication subsystem to send signals and receive command-signals (19).

4. The power electronic converter (1) according to Claims 1, 2 and 3, **characterized in that** the optimization subsystem (21) has the ability to forecast the electrical load of the local system (8) served by the power electronic converter (1).

5. The power electronic converter (1) according to Claims 1, 2, 3 and 4 **characterized in that** it has the ability to support the frequency and voltage at its common coupling point with the electrical network (2) using instantaneous measurements of voltage and current at the common coupling point with the electrical network (2) provided by an electronic measuring device (24) integrated in the smart power electronic converter (1).

6. The power electronic converter (1) according to Claims 1, 2, 3, 4 and 5 **characterized in that** it has the ability to ensure seamless operation of the local electrical load (8) during transient or extended disturbances of the electrical mains supply (2).

7. The power electronic converter (1) according to Claims 1, 2, 3, 4, 5 and 6 **characterized in that** it has switching devices (11), (12), (13) for connecting the local load (8) when the electricity supply from the electrical network has been interrupted (2).
